# EUROPÄISCHE PATENTANMELDUNG

(11) **EP 2 034 768 A2**
(43) Veröffentlichungstag der Anmeldung: **11.03.2009**
(21) Anmeldenummer: 08104861.3
(22) Anmeldetag: 24.07.2008
(51) Int. Cl.: H04R 25/00

(54) **Hörgerät mit Kontaktmittel, dazugehörige externe Einheit und Batterieladeanordnung**

(30) Priorität: 06.09.2007 DE 102007042324
(71) Anmelder: Siemens Medical Instruments Pte. Ltd., Singapore 139959 (SG)
(72) Erfinder: Schmidt, Benjamin, 90419, Nürnberg (DE); Weigert, Roland, 91058, Erlangen (DE)
(74) Vertreter: Maier, Daniel Oliver

(57) **Zusammenfassung**

Die Erfindung gibt ein Hörgerät (1) an, welches mindestens ein in das Hörgerätegehäuse versenkbares Kontaktmittel (4) aufweist. Das Kontaktmittel (4) kontaktiert in einer ausgefahrenen oder ausgeklappten Position eine externe Einheit (5), beispielsweise ein Batterieladegerät (16). Die Einheit (5) weist zur Aufnahme des Kontaktmittels (4) eine korrespondierende Öffnung (6) auf. Dadurch kann beispielsweise beim Laden einer wiederaufladbaren Batterie (17) des Hörgeräts (1) eine zuverlässige Verbindung zwischen dem Hörgerät (1) und dem Ladegerät (16) hergestellt werden. Das Kontaktmittel (4) kann erste und zweite Kontaktelemente (8, 9), die externe Einheit korrespondierende dritte Kontaktelemente (11) aufweisen.

## Beschreibung

Die Erfindung betrifft ein im Patentanspruch 1 angegebenes Hörgerät, eine im Patentanspruch 6 angegebene dazugehörige externe Einheit sowie eine im Patentanspruch 13 angegebene Batterieladeanordnung mit Hörgerät und externer Einheit.

Hörgeräte müssen für unterschiedliche Anwendungen mit einer externen Einheit Kontakt aufnehmen. Beispielsweise benötigen Hörgeräte für ihren Betrieb eine Energiequelle zur Versorgung der elektrischen Komponenten. In der Regel sind deshalb Hörgeräte mit Batterien ausgestattet. Um ein zeitaufwendiges und kostspieliges Wechseln der Batterien zu vermeiden, werden oft wiederaufladbare Batterien verwendet. Zum Aufladen werden diese entweder aus dem Hörgerät entfernt und an eine Batterieladestation angeschlossen, oder die Batterien bleiben im Hörgerät und werden über im Gehäuse integrierte Ladekontakte mit einer Batterieladestation verbunden.

Insbesondere bei einem In-dem-Ohr Hörgerät, dessen Gehäuse individuell entsprechend der Form des Gehörgangs des Hörgeräteträgers geformt ist, kann eine Positionierung von Ladekontakten zur sicheren Verbindung mit einer standardisierten Batterieladestation schwierig sein.

Eine bekannte Lösung besteht daher darin, ein induktives Batterieladeverfahren zu verwenden, bei dem eine im Hörgerät angeordnete Spule die von einer Spule des Ladegeräts abgestrahlte elektrische Energie berührungslos aufnimmt und an die Batterie weiterleitet. Ein Beispiel eines induktiven Ladesystems für Hörhilfen ist in der Patentschrift DE 41 04 359 C2 angegeben.

Nachteilig an einer induktiven Ladevorrichtung sind der geringe Wirkungsgrad und die erforderliche große, Platz verschwendende Ladespule im Inneren des Hörgeräts.

Es ist Aufgabe der Erfindung diese Nachteile zu überwinden und ein Hörgerät anzugeben, welches zuverlässig und einfach mit einer externen Einheit kontaktierbar ist.

Gemäß der Erfindung wird die gestellte Aufgabe mit der Anordnung des unabhängigen Patentanspruchs 1 gelöst, indem das Hörgerät mindestens ein in das Hörgerätegehäuse versenkbares Kontaktmittel umfasst. Dieses ist ausfahrbar oder ausklappbar und in seiner ausgefahrenen oder ausgeklappten Position mit einer externen Einheit, beispielsweise einem Batterieladegerät, kontaktierbar.

Dies bringt den Vorteil, dass ein definierter, zuverlässiger Kontakt herstellbar ist.

In einer Weiterbildung kann das Hörgerät so ausgebildet sein, dass das Kontaktmittel in die externe Einheit einführbar ist.

Vorteilhaft daran ist, dass die Kontaktierung robust und stabil ist.

In einer weiteren Ausführungsform kann das Kontaktmittel ein erstes Kontaktelement oder ein erstes und ein zweites Kontaktelement aufweisen.

Dadurch können elektrische Signale und elektrische Ströme zwischen einer externen Einheit und dem Hörgerät übertragen werden.

In einer Weiterbildung kann das Kontaktmittel zur mechanischen Verbindung mit der externen Einheit ein erstes Magnetelement, beispielsweise an seiner Spitze, aufweisen.

Dies hat den Vorteil, dass eine robuste mechanische Verbindung zwischen der externen Einheit und dem Hörgerät herstellbar ist.

Eine weitere Aufgabe der Erfindung besteht darin, eine zum erfindungsgemäßen Hörgerät korrespondierende externe Einheit anzugeben.

Gemäß der Erfindung wird die gestellte Aufgabe mit der Vorrichtung des unabhängigen Patentanspruchs 6 gelöst, indem eine externe Einheit eine zu dem Kontaktmittel korrespondierende Öffnung aufweist. Diese Öffnung nimmt das Kontaktmittel auf. Das Hörgerät ist quasi an der externen Einheit "angedockt".

Dadurch findet das Kontaktmittel auf einfache Weise die für die Kontaktierung erfordeliche Position.

In einer weiteren Ausführungsform kann die Öffnung derart ausgestaltet sein, dass das Kontaktmittel beim Einführen in die Öffnung von den seitlichen Begrenzungen der Öffnung geführt wird.

Vorteilhaft daran ist, dass dadurch eine passgenaue und damit zuverlässige Einführung und Kontaktierung möglich wird.

In einer Weiterbildung kann in der Öffnung mindestens ein drittes Kontaktelement angeordnet sein, das mit dem ersten und/oder zweiten Kontaktelement eine Wirkverbindung herstellt.

Dadurch können beispielsweise elektrische Signale übertragen werden.

In einer Weiterbildung kann das dritte Kontaktelement ein erstes Federelement umfassen, mit dessen Hilfe das Kontaktelement federnd in der Öffnung lagerbar ist.

Dies hat den Vorteil einer verbesserten Kontaktierung zwischen den Kontaktelementen des Hörgeräts und denen der externen Einheit.

In einer weiteren Ausführungsform kann am Boden der Öffnung ein zweites Magnetelement angeordnet sein. Dieses geht mit dem ersten Magnetelement eine Wirkverbindung ein.

Dadurch wird das Kontaktmittel fest, aber trotzdem lösbar in der Öffnung gehalten.

In einer Weiterbildung weist das zweite Magnetelement ein zweites Federelement auf, mit dessen Hilfe das zweite Magnetelement federnd in der Öffnung lagerbar ist.

Dies optimiert das Halten des Kontaktelements in der Öffnung.

In einer Weiterbildung kann die Öffnung als Sackloch ausgebildet sein.

Dieses ist einfach und präzise herstellbar.

Eine weitere Aufgabe der Erfindung besteht darin, eine Batterieladeanordnung anzugeben.

Gemäß der Erfindung wird die gestellte Aufgabe mit der Anordnung des unabhängigen Patentanspruchs 13 gelöst, indem eine im erfindungsgemäßen Hörgerät angeordnete wiederaufladbare Batterie mit dem Kontaktmittel verbunden ist, und die erfindungsgemäße externe Einheit ein elektrisches Batterieladegerät umfasst.

Dies bietet den Vorteil, dass auf einfache und zuverlässige Weise auch bei In-dem-Ohr Hörgeräten eine wiederaufladbare Batterie - ohne diese aus dem Hörgerät herausnehmen zu müssen
- nachgeladen werden kann.

Weitere Besonderheiten der Erfindung werden aus den nachfolgenden Erläuterungen mehrerer Ausführungsbeispiele anhand von schematischen Zeichnungen ersichtlich.

Es zeigen:
- Figur 1:: ein In-dem-Ohr Hörgerät,
- Figur 2a:: ein eingefahrenes Kontaktmittel,
- Figur 2b:: ein ausgefahrenes Kontaktmittel,
- Figur 3a:: ein eingeklapptes Kontaktmittel,
- Figur 3b:: ein ausgeklapptes Kontaktmittel,
- Figur 4:: eine Teilansicht eines Hörgeräts und einer externen Einheit,
- Figur 5:: eine Teilansicht eines weiteren Hörgeräts und einer weiteren externen Einheit,
- Figur 6:: eine Teilansicht eines weiteren Hörgeräts und einer weiteren externen Einheit,
- Figur 7a:: eine Stirnplatte mit Kontaktmittel,
- Figur 7b:: eine Detailansicht des Kontaktmittels aus Figur 7a,
- Figur 8:: eine weitere Stirnplatte mit Kontaktmittel,
- Figur 9:: ein Sackloch einer externen Einheit und
- Figur 10:: einen Teil einer Batterieladeanordnung mit Hörgerät.

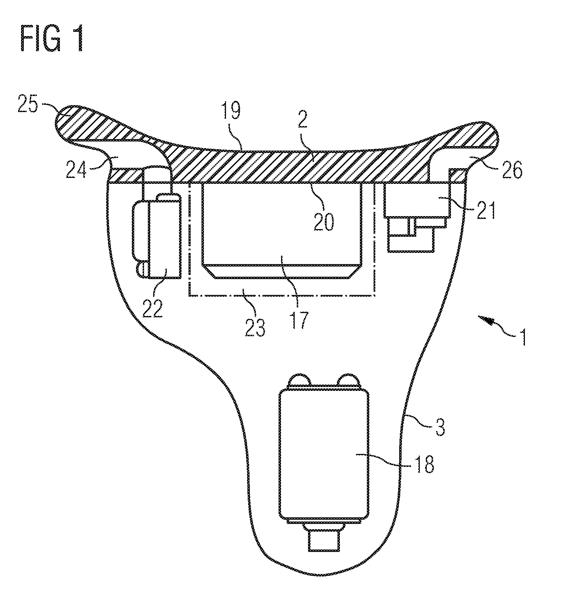

Figur 1 zeigt einen Schnitt durch ein In-dem-Ohr Hörgerät 1 mit einer mittels eines Ohrabdrucks individuell gefertigten Gehäuseschale 3, in deren proximalem inneren Gehäuseabschnitt ein Hörer 18 angeordnet ist und wobei auf die ebene Stirn des distalen wulstigen Kopfteils der Schale 3 eine Stirnplatte 2 aufgesetzt ist.

Die Stirnplatte 2 ist ein vorzugsweise vorgefertigtes Press- oder Spritzgussteil aus Kunststoff. Die Sichtfläche 19 der Stirnplatte 2 weist in der Regel weder Durchbrüche, Bohrungen, Öffnungen, Bauelemente oder dergleichen auf. Erfindungsgemäß weist die Sichtfläche 19 aber einen nicht dargestellten Durchbruch zur Aufnahme eines Kontaktmittels 4 auf. In Anpassung an den Verlauf der menschlichen Ohrmuschel ist die Sichtfläche 19 der Stirnplatte 2 konkav geformt bzw. hat eine der menschlichen Ohrmulde nachgeformte Kontur.

Die Stirnplatte 2 ist auf der der Sichtfläche 19 abgewandten Gehäuseinnenseite 20 mit Hörgerätebauteilen 21, 22, 23 bestückt und bildet mit diesen eine Funktionseinheit. Im Ausführungsbeispiel trägt die Stirnplatte 2 gehäuseseitig ein Mikrophon 22, eine Verstärkereinheit 21 und ein Batteriefach 23 mit einer wiederaufladbaren Batterie 17. Mit 24 ist eine im Randbereich 25 der Stirnplatte 2 angeordnete Schalleinlassöffnung bezeichnet, durch welche die Schallsignale zum zugeordneten Mikrofon 22 gelangen können. Für den Fall, dass das Hörgerät 1 auch einen Ventkanal zur Belüftung und zum Druckausgleich des Gehörgangs umfassen soll, wird die Ventöffnung 26 ebenfalls im Randbereich 25 der Stirnplatte 2 angeordnet.

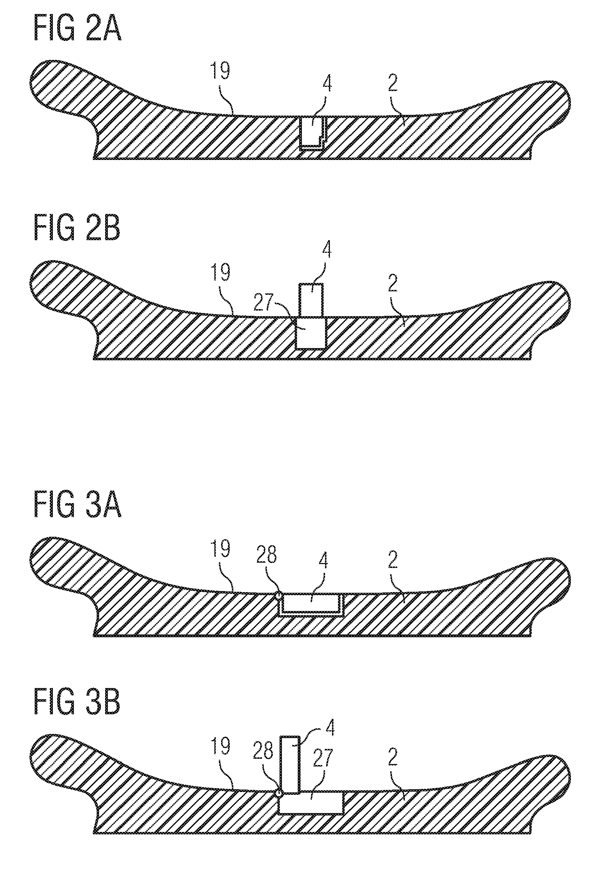

Figur 2a zeigt einen Schnitt durch die Stirnplatte 2 eines In-dem-Ohr Hörgeräts. Erfindungsgemäß ist in der Stirnplatte 2 von der Sichtfläche 19 her ein in der Stirnplatte 2 versenktes Kontaktmittel 4 angeordnet. Durch Druck auf das Kontaktmittel 4 kann dieses aus der Stirnplatte 2 herausfahren. Zum Versenken wird das Kontaktmittel 4 in die Stirnplatte 2 gedrückt und dann in einer Halteposition gehalten.

Figur 2b zeigt die Anordnung aus Figur 2a in ausgefahrener Position des Kontaktmittels 4. Durch Druck auf das Kontaktmittel 4 springt dieses aus der Sichtfläche 19 der Stirnplatte 2 des Hörgeräts 1 heraus und hinterlässt in der Stirnplatte 2 eine Öffnung 27.

In Figur 3a ist ein Schnitt durch eine weitere Ausführungsform einer Stirnplatte 2 eines erfindungsgemäßen Hörgeräts 1 dargestellt. Hierbei ist das Kontaktmittel 4 klappbar angeordnet und in Figur 3a in eingeklappter Position dargestellt. Das Kontaktmittel 4 ist um eine Scharnierachse 28 drehbar gelagert und mittels nicht dargestellter Federelemente durch Druck auf das Kontaktmittel 4 einfach aufschwenkbar.

Figur 3b zeigt die aufgeklappte Position des Kontaktmittels 4 aus Figur 3a. Das Kontaktmittel 4 ist um die Scharnierachse 28 aus der Sichtfläche 19 der Stirnplatte 2 heraus geschwenkt. Das aufgeklappte Kontaktmittel 4 hinterlässt eine Öffnung 27 in der Sichtfläche 19.

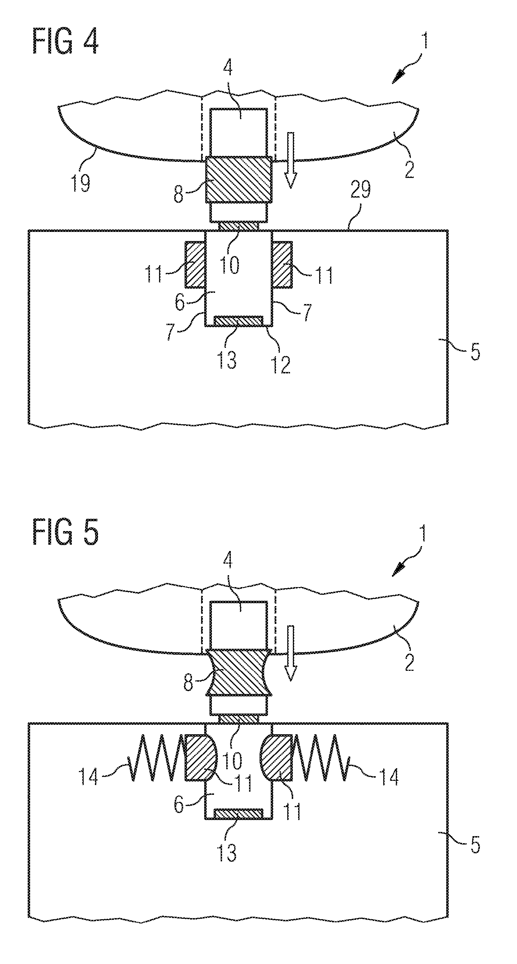

In Figur 4 ist eine Teilansicht eines Schnittes durch ein erfindungsgemäßen In-dem-Ohr Hörgeräts 1 und eine externen Einheit 5, beispielsweise ein Batterieladegerät, dargestellt. Die Stirnplatte 2 des Hörgeräts 1 umfasst ein ausfahrbares zylinderförmiges Kontaktmittel 4 in Form eines Druckknpfes, welches in der ausgefahrenen Position gezeichnet ist. Das Kontaktmittel 4 passt formschlüssig in eine Öffnung 6, zum Beispiel ein Sackloch, einer externen Einheit 5. Im eingeführten Zustand kontaktiert ein erstes Kontaktelement 8, welches zylinderförmig auf der Außenseite des Kontaktmittels 4 angeordnet ist, ein auf der Innenseite 7 der Öffnung 6 zylinderförmig angeordnetes drittes Kontaktelement 11. Somit wird zum Beispiel eine elektrische, widerstandsarme Verbindung hergestellt, über die beispielsweise eine nicht dargestellte Batterie des Hörgeräts geladen werden kann.

Zur Verbesserung der mechanischen Verbindung zwischen Hörgerät 1 und externen Einheit 5 im angedockten Zustand und zur Stabilisierung dieser Verbindung sind ein erstes Magnetelement 10 an der Spitze des Kontaktmittels 4 und ein korrespondierendes zweites Magnetelement 13 am Boden 12 der Öffnung 6 angeordnet. Diese bilden eine kraftschlüssige, aber wieder lösbare Verbindung.

Ein nicht dargestelltes zweites Kontaktelement 9 bildet den zweiten Pol der elektrischen Verbindung. Das zweite Kontaktelement 9 kann entweder auf der Sichtfläche 19 der Stirnplatte 2 oder aber wie das erste Kontaktelement 8 auf dem Kontaktmittel 4 angeordnet sein. Korrespondierend sind dann weitere, nicht dargestellte dritte Kontaktmittel beispielsweise ringförmig auf der Stirnseite 29 der externen Einheit 5 oder beispielsweise zylinderförmig in der Öffnung 6 angeordnet.

Eine Weiterbildung der Anordnung aus Figur 4 ist in Figur 5 dargestellt. Ein Teil des Kontaktmittels 4, auf dem ein erstes Kontaktelement 8 angeordnet ist, zeigt eine konvexe Form. Dieses konvexe Kontaktmittel 4 korrespondiert in idealer Weise mit den konkav geformten dritten Kontaktelementen 11 in der Öffnung 6 der externen Einheit 5. Zusätzlich sorgen Federelemente 14 unterhalb der dritten Kontaktelemente 11 für eine verbesserte Kontaktierung mit dem ersten Kontaktelement 8 sowie einer verstärkten Andockung des Hörgeräts 1 an die externe Einheit 5. Die Andockkraft wird zusätzlich durch die in Figur 4 beschriebenen Magnetelemente 10, 13 erhöht.

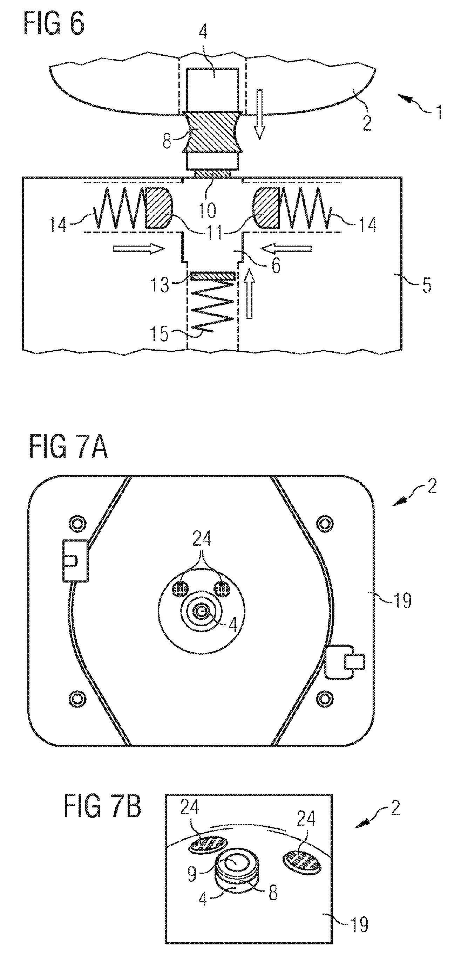

In Figur 6 ist eine Weiterbildung der Anordnung aus Figur 5 dargestellt, wobei zusätzlich zur federnden Lagerung der dritten Kontaktelemente 11 das zweite Magnetelement 13 ebenfalls mittels eines zweiten Federelements 15 federnd gelagert ist.

Figur 7a zeigt stark vergrößert die Sichtfläche 19 einer Stirnplatte 2 eines In-dem-Ohr Hörgeräts 1 mit zwei Mikrofonöffnungen 24 und einem zentral angeordneten, eingefahrenen Kontaktmittel 4. Zum Zusammenbau des In-dem-Ohr Hörgerät 1 wird eine nicht dargestellte Gehäuseschale 3 mit der nicht sichtbaren Seite der Stirnplatte 2 verklebt. Die überstehenden Teile der Stirnplatte 2 werden nach dem Verkleben abgeschnitten.

Eine Detailaufnahme der Stirnfläche 19 aus Figur 7a ist in Figur 7b sichtbar. Neben den beiden Mikrofonöffnungen 24 in der Sichtfläche 19 ist das ausgefahrene Kontaktmittel 4 zu erkennen. Auf der zylindrischen Außenseite des Kontaktmittels ist das erste Kontaktelement 8 ringförmig angeordnet. Auf der Spitze des Kontaktmittels 4 ist ein zweites Kontaktelement 9 angeordnet. Das Kontaktmittel 4 ist in Form eines Druckknopfes ausgebildet.

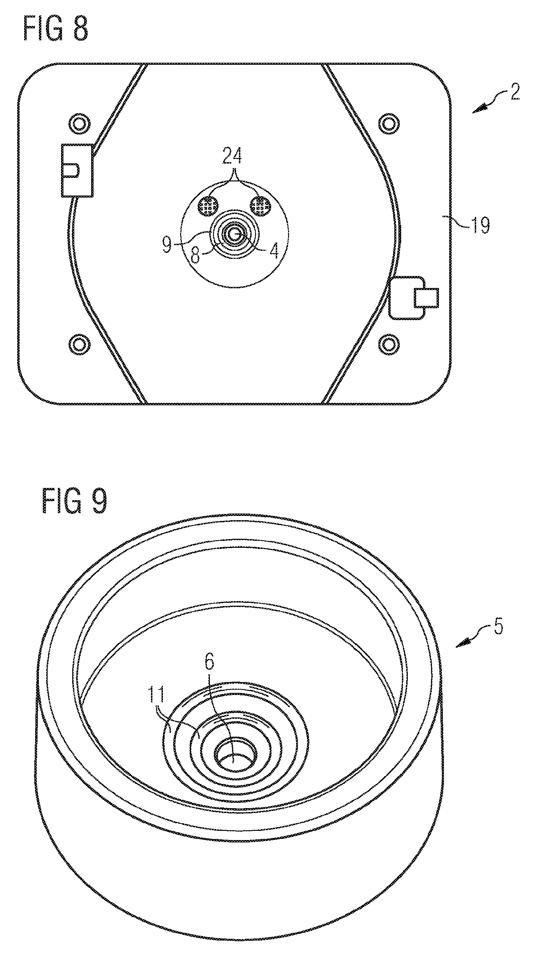

Figur 8 zeigt eine stark vergrößerte weitere Ausführungsform der Stirnplatte 2 aus Figur 7a. Die Kontaktelemente 8, 9 sind nicht auf dem Kontaktmittel 4 sondern auf der Sichtseite 19 der Stirnplatte 2 angeordnet. Das erste Kontaktelement 8 und das zweite Kontaktelement 9 sind als konzentrische Kreise um das Kontaktmittel 4 angeordnet. Bei dieser Ausführungsform dient das Kontaktmittel 4 ausschließlich der Herstellung einer festen mechanischen Verbindung mit einer nicht dargestellten externen Einheit 5.

Figur 9 zeigt einen stark vergrößerten Teil einer externen Einheit 5. Zu erkennen sind die Öffnung 6 zum Einführen des Kontaktmittels 4 und die beiden dritten Kontaktelemente 11 zur Herstellung des Kontakts mit dem ersten und zweiten Kontaktelement 8, 9 aus Figur 8.

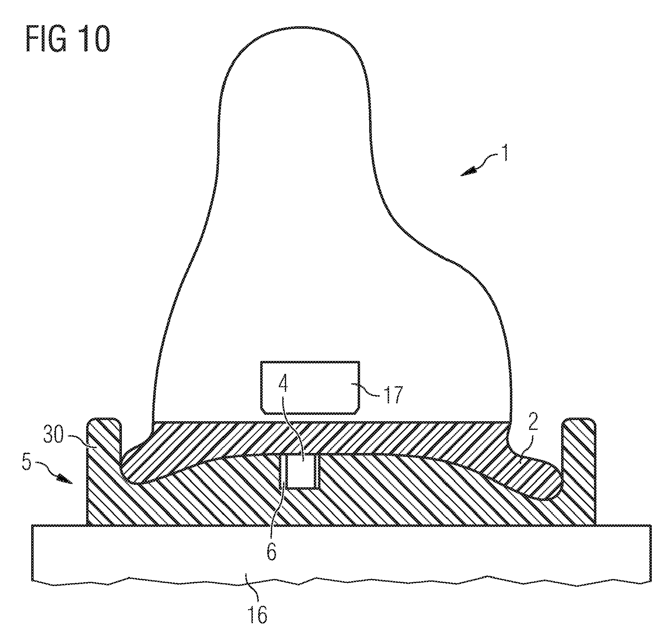

Figur 10 stellt vereinfacht einen Teil eines Schnittes durch eine Batterieladeanordnung dar. Ein In-dem-Ohr Hörgerät 1 mit Stirnplatte 2 und einer Batterie 17, die mit nicht dargestellten Kontaktelementen verbunden ist, ist mit einem ausgefahrenen Kontaktmittel 4 an eine Aufnahmevorrichtung 30 einer externen Einheit 5, die ein Batterieladegerät 16 umfasst, angedockt. Dazu wird das Kontaktmittel 4 in die Öffnung 6 der Haltevorrichtung 30 eingeführt. So wird das Hörgerät 1 in der externen Einheit 5 mechanisch fixiert.

Neben den beschriebenen Ausführungsformen zur Anordnung der ersten, zweiten und dritten Kontaktelemente 8, 9, 11 gibt es noch unterschiedlichste Möglichkeiten und Kombinationen die Kontaktelemente 8, 9, 11 anzuordnen. Beispielsweise kann das erste Kontaktelement 8 auf der Spitze des Kontaktmittels 4 und das korrespondierende dritte Kontaktmittel 11 auf dem Boden 12 der Öffnung 6 angeordnet sein. Oder das erste und das zweite Kontaktmittel 8, 9 sind beide ringförmig auf dem Kontaktelement 4 angebracht mit entsprechenden dritten Kontaktelementen 11 auf der Innenwand der Öffnung 6.

### Bezugszeichenliste

- 1: Hörgerät
- 2: Stirnplatte
- 3: Gehäuseschale
- 4: Kontaktmittel
- 5: externe Einheit
- 6: Öffnung
- 7: Innenwand der Öffnung
- 8: erstes Kontaktelement
- 9: zweites Kontaktelement
- 10: erstes Magnetelement
- 11: drittes Kontaktelement
- 12: Boden der Öffnung 6
- 13: zweites Magnetelement
- 14: erstes Federelement
- 15: zweites Federelement
- 16: Batterieladegerät
- 17: Batterie
- 18: Hörer
- 19: Sichtseite der Stirnplatte 2
- 20: untere Seite der Stirnplatte 2
- 21: Verstärker
- 22: Mikrofon
- 23: Batteriefach
- 24: Mikrofonöffnung
- 25: Stirnplattenwulst
- 26: Ventöffnung
- 27: Öffnung in der Stirnplatte 2
- 28: Scharnierachse
- 29: Stirnseite der externe Einheit 5
- 30: Haltevorrichtung

## Patentansprüche

1. Hörgerät (1),
**dadurch gekennzeichnet,**
**dass** das Hörgerät (1) mindestens ein in das Hörgerätegehäuse versenkbares Kontaktmittel (4) aufweist, welches derart ausgebildet ist, dass es in einer ausgefahrenen oder ausgeklappten Position mit einer externen Einheit (5) kontaktierbar ist.

2. Hörgerät (1) nach Anspruch 1,
**dadurch gekennzeichnet,**
**dass** das Kontaktmittel (4) in die externe Einheit (5) einführbar ist.

3. Hörgerät (1) nach Anspruch 1 oder 2,
**dadurch gekennzeichnet,**
**dass** das Kontaktmittel (4) ein erstes Kontaktelement (8) aufweist.

4. Hörgerät (1) nach Anspruch 1 oder 2,
**dadurch gekennzeichnet,**
**dass** das Kontaktmittel (4) ein erstes Kontaktelement (8) und ein zweites Kontaktelement (9) aufweist.

5. Hörgerät (1) nach einem der vorigen Ansprüche,
**dadurch gekennzeichnet,**
**dass** das Kontaktmittel (4) zur mechanischen Verbindung mit der externen Einheit (5) ein erstes Magnetelement (10) aufweist.

6. Externe Einheit (5),
**dadurch gekennzeichnet,**
**dass** die Einheit (5) eine mit dem Kontaktmittel (4) nach einem der Ansprüche 1 bis 5 korrespondierende Öffnung (6) zur Aufnahme dieses aufweist.

7. Externe Einheit (5) nach Anspruch 6,
**dadurch gekennzeichnet,**
**dass** die Öffnung (6) derart angeordnet und ausgestaltet ist,
**dass** das Kontaktmittel (4) beim Einführen in die Öffnung (6) von den seitlichen Begrenzungen (7) der Öffnung geführt wird.

8. Externe Einheit (5) nach einem der Ansprüche 6 oder 7,
**dadurch gekennzeichnet,**
**dass** mindestens ein in der Öffnung (6) angeordnetes drittes Kontaktelement (11) derart ausgebildet ist, dass mit dem ersten und/oder zweiten Kontaktelement (8, 9) eine Wirkverbindung herstellbar ist.

9. Externe Einheit (5) nach Anspruch 8,
**dadurch gekennzeichnet,**
**dass** das mindestens eine dritte Kontaktelement (11) ein erstes Federelement (14) umfasst, mit dessen Hilfe das Kontaktelement (11) federnd in der Öffnung (6) lagerbar ist.

10. Externe Einheit (5) nach einem der Ansprüche 6 bis 9,
**dadurch gekennzeichnet,**
**dass** am Boden (12) der Öffnung (6) ein zweites Magnetelement (13) derart angeordnet ist, dass mit dem ersten Magnetelement (10) eine Wirkverbindung herstellbar ist.

11. Externe Einheit (5) nach Anspruch 10,
**dadurch gekennzeichnet,**
**dass** das zweite Magnetelement (13) ein zweites Federelement (15) umfasst, mit dessen Hilfe das zweite Magnetelement (13) federnd in der Öffnung (6) lagerbar ist.

12. Externe Einheit (5) nach einem der Ansprüche 6 bis 11,
**dadurch gekennzeichnet,**
**dass** die Öffnung (6) ein Sackloch umfasst.

13. Batterieladeanordnung mit einem Hörgerät (1) nach einem
der Ansprüche 1 bis 5 und einer externer Einheit (5) nach einem der Ansprüche 6 bis 11, wobei mindestens eine im Hörgerät (1) angeordnete wiederaufladbare Batterie (17) mit dem Kontaktmittel (4) verbunden ist, und die externe Einheit (5) ein elektrisches Batterieladegerät (16) umfasst.
